# EUROPÄISCHE PATENTANMELDUNG

(11) **EP 4 390 495 A1**
(43) Veröffentlichungstag der Anmeldung: **26.06.2024**
(21) Anmeldenummer: 23217386.4
(22) Anmeldetag: 16.12.2023
(51) Int. Cl.: G02B 17/06, G01J 3/06, G01J 3/28

(54) **BEOBACHTUNGSINSTRUMENT ZUR BEOBACHTUNG EINES HIMMELSKÖRPERS**

(30) Priorität: 22.12.2022 DE 102022134643
(71) Anmelder: Weigele Scientific GmbH, 88605 Messkirch (DE)
(72) Erfinder: Weigele, Uwe Dieter, 88605 Meßkirch (DE)
(74) Vertreter: Westphal, Mussgnug & Partner Patentanwälte mbB

(57) **Zusammenfassung**

Beobachtungsinstrument (10) zur Beobachtung eines Himmelskörpers (12) mit
• einer Eingangsebene (18) mit einem Eingangsspalt (20) zum Einlass mindestens eines Teils eines Himmelskörperbildes,
• einer Bilderzeugungsvorrichtung (22) zur Erzeugung des Himmelskörperbildes auf der Eingangsebene (18), wobei die Bilderzeugungsvorrichtung (22) ein erstes Reflexionselement (26) umfasst,
• einer Scanachse (24),
wobei das erste Reflexionselement (26) derart kippbar um die Scanachse (24) angeordnet ist, dass durch ein Kippen des ersten Reflexionselements (26) um die Scanachse (24) eine Relativbewegung zwischen dem Himmelskörperbild und der Eingangsebene (18) erzeugbar ist.

## Beschreibung

Die Erfindung betrifft ein Beobachtungsinstrument zur Beobachtung eines Himmelskörpers.

Zur Beobachtung der Sonne werden unter anderem sogenannte Spektroheliographen als Beobachtungsinstrumente eingesetzt. Ein Spektroheliograph dient der Erzeugung eines monochromatischen Bildes der Sonne. Dabei fällt das Sonnenlicht durch das Objektiv eines Teleskops auf einen Eingangsspalt des Spektroheliographen, sodass auf dem Eingangsspalt ein Sonnenbild erzeugt wird. Durch den Eingangsspalt tritt ein schmaler Ausschnitt des Sonnenbilds hindurch und wird, beispielsweise mittels eines Beugungsgitters, in seine Spektrallinien zerlegt. Durch die isolierte Aufnahme einer der Spektrallinien mittels einer Fotoplatte kann eine monochromatische Aufnahme des Ausschnitts des Sonnenbilds erstellt werden. In neueren Bauformen des Spektroheliographen wird die Fotoplatte häufig durch einen elektronischen Bildsensor ersetzt. Dies ist beispielsweise aus der US 7 209 229 B2 bekannt.

Um nicht nur einen Ausschnitt des Sonnenbilds sondern das gesamte Sonnenbild abbilden zu können, ist es erforderlich, das Sonnenbild gleichmäßig über den Eingangsspalt zu bewegen. Eine derartige Bewegung eines Himmelskörperbilds über das Beobachtungsinstrument wird auch als "Scannen" bezeichnet. Wesentlich ist dabei eine Koordinierung der Bewegungsgeschwindigkeit des Himmelkörperbildes mit der Fotoplatte bzw. dem elektronischen Bildsensor. Um die Koordinierung zu vereinfachen wird vorzugsweise eine konstante Bewegungsgeschwindigkeit zwischen dem Beobachtungsinstrument und dem Himmelkörperbild gewählt.

Die einfachste Möglichkeit, das Himmelkörperbild über das Beobachtungsinstrument zu bewegen besteht darin, die Erdrotation und damit natürliche Bewegung des Himmelkörperbilds gegenüber einem auf der Erde feststehenden Beobachtungsinstrument zu nutzen. Nachteilig an diesem Vorgehen ist jedoch die relativ lange Laufzeit des vollständigen Himmelkörperbilds über das Beobachtungsinstrument.

Um unabhängig von der natürlichen Bewegung des Himmelkörperbilds aufgrund der Erdrotation zu sein, wurden am Beispiel des Spektroheliographen verschiedene Techniken entwickelt, bei denen mittels eines Zölostaten bzw. mittels eines Heliostaten zunächst ein feststehendes Sonnenbild erzeugt wird, um dann eine kontrollierbare Relativbewegung zwischen dem Eingangsspalt und dem Sonnenbild erzeugen zu können. In den Observatorien von Meudon und Coimbra wird dazu beispielsweise das zwischen dem Zölostaten und dem Eingangsspalt angeordnete Fernrohrobjektiv verschoben. Die US 2011 / 0 051 121 A1 beschreibt eine Verschiebung des Eingangsspalts.

Nachteilig an den bekannten Anordnungen und Verfahren zum Bewegen des Himmelkörperbilds über das Beobachtungsinstrument ist, dass sie sehr langsam sind und/oder die Qualität der Aufnahme nicht zufriedenstellend ist.

Der Erfindung liegt daher die Aufgabe zugrunde, ein Beobachtungsinstrument zur Beobachtung eines Himmelskörpers bereitzustellen, das diese Nachteile überwindet und außerdem einfach herstellbar und bedienbar ist sowie eine kompakte Bauform aufweist.

Die Aufgabe wird erfindungsgemäß gelöst durch ein Beobachtungsinstrument mit den Merkmalen des Patentanspruchs 1.

Vorteilhafte Ausgestaltungen und Weiterbildungen der Erfindung sind in den abhängigen Ansprüchen angegeben.

Ein erfindungsgemäßes Beobachtungsinstrument zur Beobachtung eines Himmelskörpers umfasst eine Eingangsebene mit einem Eingangsspalt zum Einlass mindestens eines Teils eines Himmelskörperbildes, eine Bilderzeugungsvorrichtung zur Erzeugung des Himmelskörperbildes auf der Eingangsebene, wobei die Bilderzeugungsvorrichtung ein erstes Reflexionselement umfasst, sowie eine Scanachse. Das erste Reflexionselement ist derart kippbar um die Scanachse angeordnet, dass durch ein Kippen des ersten Reflexionselements um die Scanachse eine Relativbewegung zwischen dem Himmelskörperbild und der Eingangsebene erzeugbar ist Dadurch kann das Himmelskörperbild über den Eingangsspalt bewegt werden. Außerdem kann mittels einer derartigen Anordnung eine Scaneinrichtung auf kleinem Bauraum bereitgestellt werden und ein qualitativ hochwertiges Himmelskörperbild erzeugt werden. Vorzugsweise ist das erste Reflexionselement im in das Beobachtungsinstrument eingebauten Zustand kippbar angeordnet. Damit kann das erste Reflexionselement während der der bestimmungsgemäßen Verwendung des Beobachtungsinstruments bewegbar sein. Das erste Reflexionselement kann derart auf der Scanachse angeordnet sein, dass es von der Scanachse geschnitten wird. Vorzugsweise verläuft die erste Scanachse durch den Krümmungsscheitel des ersten Reflexionselementes. Damit kann erreicht werden, dass sich beim Kippen weder die Brennweite noch der Brennpunkt entlang einer ersten optischen Achse des ersten Reflexionselements verschiebt. Als optische Achse wird vorzugsweise die Achse bezeichnet, die durch den Mittelpunkt einer optischen Wirkfläche des entsprechenden Reflexionselements verläuft und orthogonal zu der optischen Wirkfläche in dem Mittelpunkt ausgerichtet ist.

Die Geschwindigkeit, mit der das Himmelskörperbild über den Eingangsspalt bewegt wird, kann somit insbesondere von der Geschwindigkeit abhängen, mit der das erste Reflexionselement um die Scanachse gekippt wird. Das erste Reflexionselement ist vorzugsweise im Strahlengang des von dem beobachteten Himmelskörper ausgesendeten und auf die Eingangsebene auftreffenden Lichts angeordnet.

Das von dem beobachteten Himmelskörper ausgesendete Licht kann direkt auf das erste Reflexionselement treffen. Alternativ kann das Beobachtungsinstrument mit einer Ausgleichsvorrichtung kombiniert sein, die im Strahlengang des von dem beobachteten Himmelskörper ausgesendeten Lichts zwischen dem beobachteten Himmelskörper und dem ersten Reflexionselement angeordnet ist. Mittels einer derartigen Ausgleichsvorrichtung kann das von dem beobachteten Himmelskörper ausgesendete Licht auf das erste Reflexionselement gelenkt werden. Die Ausgleichsvorrichtung kann insbesondere ausgebildet sein, die durch die Erdrotation hervorgerufene Relativbewegung zwischen dem Himmelskörperbild und dem Beobachtungsinstrument auszugleichen. Die Ausgleichsvorrichtung kann, insbesondere unmittelbar, an dem Beobachtungsinstrument angeordnet sein. Die Ausgleichsvorrichtung kann beispielsweise als Heliostat oder Zölostat ausgebildet sein. Das Beobachtungsinstrument ist vorzugsweise als Helioskop ausgebildet.

Bevorzugt ist die Bilderzeugungsvorrichtung in einem Instrumentengehäuse des Beobachtungsinstruments angeordnet. Dadurch kann das Beobachtungsinstrument kompakt aufgebaut und einfach transportierbar sein. Das erste Reflexionselement kann relativ zu dem Instrumentengehäuse drehbar um die Scanachse gelagert sein. Vorzugsweise ist die Bilderzeugungsvorrichtung vollständig in dem Instrumentengehäuse angeordnet. Bevorzugt weist das Beobachtungsinstrument genau ein Instrumentengehäuse auf, in dem besonders bevorzugt das gesamte Beobachtungsinstrument angeordnet ist. Ferner kann die Ausgleichvorrichtung in dem Instrumentengehäuse angeordnet sein.

Insbesondere wenn die Bilderzeugungsvorrichtung in dem Instrumentengehäuse des Beobachtungsinstruments angeordnet ist, kann das Beobachtungsinstrument tragbar ausgebildet sein. Das Beobachtungsinstrument wird hier und im Folgenden als tragbar bezeichnet, wenn es aufgrund seiner Form und seines Gewichts von einer durchschnittlichen erwachsenen Person getragen werden kann. Dafür weist das Beobachtungsinstrument eine Masse von bevorzugt 30 kg oder weniger auf. Dies kann den Transport vereinfachen und das Einsatzspektrum des Beobachtungsinstruments erheblich erweitern. In einem Ausführungsbeispiel der Erfindung kann die Masse des Beobachtungsinstruments im Bereich von 20 bis 30 kg liegen. Dabei weist das Beobachtungsinstrument vorzugsweise eine Länge von ca. 2 m auf. In einem weiteren Ausführungsbeispiel der Erfindung kann die Masse des Beobachtungsinstruments im Bereich von 8 bis 10 kg liegen. Dabei weist das Beobachtungsinstrument vorzugsweise eine Länge von ca. 90 cm auf.

Die Scanachse ist vorzugsweise derart angeordnet, dass durch ein Kippen des ersten Reflexionselements um die Scanachse das Himmelskörperbild orthogonal zu dem Eingangsspalt bewegbar ist. Besonders bevorzugt ist die Scanachse parallel zu dem Eingangsspalt angeordnet. Alternativ kann die Scanachse in Bezug auf den Eingangsspalt beliebig orientiert sein und ein Umlenkelement im Strahlengang zwischen dem ersten Reflexionselement und der Eingangsebene angeordnet sein. Das Umlenkelement kann das von dem ersten Reflexionselement ausgehende Licht derart umlenken, dass auch bei einer nicht-parallelen Anordnung der Scanachse zu dem Eingangsspalt das Kippen des ersten Reflexionselements um die Scanachse eine Bewegung des Himmelskörperbildes orthogonal zu dem Eingangsspalt bewirkt. Diese Konstellation wird vorzugweise derart beschrieben, dass die Scanachse mechanisch nicht-parallel aber optisch parallel zu dem Eingangsspalt angeordnet ist. Das orthogonale Bewegen des Himmelkörperbilds über den Eingangsspalt kann die Aufnahme der einzelnen durch den Eingangsspalt fallenden Ausschnitte des Himmelskörperbildes und deren anschließende Zusammensetzung zu einem Gesamtbild erleichtern.

In einer bevorzugten Ausführungsform der Erfindung ist das erste Reflexionselement konkav, insbesondere sphärisch konkav, ausgebildet.

Alternativ kann das erste Reflexionselement konvex, insbesondere sphärisch konvex, ausgebildet sein. Eine derartige Ausführungsform des ersten Reflexionselements wird vorzugsweise verwendet, wenn das erste Reflexionselement in optischer Wirkverbindung mit weiteren optischen Elementen, insbesondere der Bilderzeugungsvorrichtung, steht.

Das erste Reflexionselement kann aufgrund der konkaven oder konvexen Ausbildung einen ersten Brennpunkt aufweisen. Das erste Reflexionselement kann damit nicht nur eine Funktion im Hinblick auf die Bewegung des Himmelskörperbildes über den Eingangsspalt sondern auch im Hinblick auf die Erzeugung des Himmelskörperbildes auf dem Eingangsspalt übernehmen.

Die hier und im Folgenden verwendeten Begriffe "konkav" beziehungsweise "konvex" beschreiben vorzugsweise die Formgebung einer optischen Wirkfläche des entsprechenden Reflexionselements, auf die das einfallende Licht auftrifft. Der Begriff "sphärisch" bezieht sich hier und im Folgenden vorzugsweise auf die optische Wirkfläche des entsprechenden Reflexionselements. Bei einer sphärischen Ausbildung des Reflexionselements weist die konkav beziehungsweise konvex ausgebildete Wirkfläche vorzugsweise einen konstanten Krümmungsradius auf. Alternativ zu einem sphärischen Querschnitt kann jede der hier und im Folgenden beschriebenen optischen konkaven bzw. konvexen Wirkflächen einen kegelförmigen, insbesondere einen parabelförmigen, elliptischen oder abgeflacht elliptischen, Querschnitt aufweisen. Sphärische Flächen können den Vorteil aufweisen, dass sie kostengünstig herstellbar sind. Darüber hinaus können sie leicht zu zentrieren sein, da ihr Krümmungsradius, im Unterschied beispielsweise zu einer Fläche mit einem parabelförmigen Querschnitt, konstant ist.

In einer besonders bevorzugten Ausführungsform der Erfindung weist die Bilderzeugungsvorrichtung ein zweites Reflexionselement auf, das mit dem ersten Reflexionselement in optischer Wirkverbindung steht. Die Wirkverbindung ist vorzugsweise derart ausgestaltet, dass eine zweite optische Wirkfläche des zweiten Reflexionselements einer ersten optischen Wirkfläche des ersten Reflexionselements zugewandt ist. Das erste Reflexionselement und das zweite Reflexionselement werden vorzugsweise dann als einander zugewandt angeordnet bezeichnet, wenn sie derart angeordnet sind, dass auf das erste Reflexionselement einfallendes Licht nach einer Reflexion an dem ersten Reflexionselement direkt, also ohne weitere Umlenkung, auf das zweite Reflexionselement auftreffen kann. Das zweite Reflexionselement kann auf der ersten optischen Achse angeordnet sein. So kann eine Reflexion des auf das erste Reflexionselement auftreffenden Lichts zu dem zweiten Reflexionselement stattfinden. Der Aufprallwinkel, in dem das einfallende Licht auf das zweite Reflexionselement auftrifft, ist typischerweise gleich dem Abprallwinkel, unter dem das von dem zweiten Reflexionselement reflektierte Licht von dem zweiten Reflexionselement abprallt. Der Effekt des Kippens des ersten Reflexionselements auf das auf der Eingangsebene erzeugte Himmelskörperbild kann sich dadurch verdoppeln. Dadurch kann bei Vorhandensein des zweiten Reflexionselements bei einer Halbierung des Kippwinkels des ersten Reflexionselements im Vergleich zu einer Ausführungsform ohne das zweite Reflexionselement die gleiche Bewegung des Himmelskörperbilds auf der Eingangsebene bewirkt werden. Das erste und/oder das zweite Reflexionselement sind vorzugsweise jeweils als Spiegel ausgebildet.

Außerdem kann durch das optische Zusammenwirken des ersten Reflexionselements mit dem zweiten Reflexionselement die Fokussierung des Himmelskörperbilds innerhalb der Bilderzeugungsvorrichtung auf mehrere Instanzen verteilt werden. Dadurch kann die mit dem Licht des Himmelskörperbilds in das Beobachtungsinstrument eingetragene Wärme gleichmäßiger verteilt und damit besser abgeführt werden. Darüber hinaus ist die Anordnung des zweiten Reflexionselements um mindestens eine weitere Scanachse denkbar.

Das zweite Reflexionselement ist bevorzugt konvex, insbesondere sphärisch konvex, ausgebildet. Eine derartige Ausbildung des zweiten Reflexionselements kommt vorzugsweise in Kombination mit einer konkaven, einschließlich sphärisch konkaven Ausbildung des ersten Reflexionselements zur Anwendung. Alternativ kann das zweite Reflexionselement konkav, insbesondere sphärisch konkav, oder plan ausgebildet sein. Das zweite Reflexionselement kann bei einer konkaven oder konvexen Ausbildung einen zweiten Brennpunkt aufweisen. Im Falle einer konkaven oder konvexen Ausbildung eines der Reflexionselemente, verläuft die entsprechende optische Achse vorzugsweise als Normale durch einen Krümmungsscheitel des jeweiligen Reflexionselements.

Vorzugsweise ist die Petzval-Summe der Bilderzeugungsvorrichtung 0. Dadurch weist das auf der Eingangsebene erzeugte Himmelskörperbild keine Bildwölbung auf. Vorzugsweise weisen die optische Wirkfläche des ersten Reflexionselements und die optische Wirkfläche des zweiten Reflexionselements die gleichen oder nahezu gleichen Krümmungsradien auf. So kann die Petzval-Summe von 0 ausschließlich mit dem ersten Reflexionselement und dem zweiten Reflexionselement realisiert werden.

Das zweite Reflexionselement kann in einem einfallenden Strahlengang des ersten Reflexionselements angeordnet sein. Unter dem einfallenden Strahlengang wird hier und im Folgenden vorzugsweise der Bereich verstanden, durch den Licht auf die optische Wirkfläche des entsprechenden Reflexionselements fällt. Durch eine derartige Anordnung kann ein geometrisch einfacher Aufbau der Bilderzeugungsvorrichtung erreicht werden.

Das erste Reflexionselement kann eine Durchtrittsöffnung für einen ausgehenden Strahlengang des zweiten Reflexionselements aufweisen. Unter dem ausgehenden Strahlengang wird hier und im Folgenden vorzugsweise der Bereich verstanden, durch den von der optischen Wirkfläche des entsprechenden Reflexionselements ausgehendes Licht hindurchtritt. Durch eine derartige Anordnung kann der ausgehende Strahlengang des zweiten Reflexionselements auf die Eingangsebene treffen.

In einer bevorzugten Ausführungsform der Erfindung ist die Bilderzeugungsvorrichtung als Spiegeloptik ausgebildet. Die optischen Elemente, die wesentlichen Einfluss auf die Abbildungsqualität oder den Abbildungsmaßstab haben, sind damit vorzugsweise als im Wesentlichen reflektierende Elemente ausgebildet. Dadurch lässt sich ein qualitativ hochwertiges Himmelskörperbild auf der Eingangsebene erzeugen, dessen Qualität insbesondere von der Wellenlänge oder dem Winkel des einfallenden Lichts nicht wesentlich beeinträchtigt wird. Vorzugsweise sind das erste Reflexionselement und das zweite Reflexionselement jeweils als Spiegel ausgebildet. Die als Spiegeloptik ausgebildete Bilderzeugungsvorrichtung kann mindestens eine Feldlinsen umfassen, die bevorzugt im Strahlengang nahe der Eingangsebene angeordnet ist. Dadurch kann eine Austrittspupille der Bilderzeugungsvorrichtung auf eine Eintrittspupille des Kollimationsobjektivs abgebildet werden. Die mindestens eine Feldlinse hat üblicherweise keinen wesentlichen Einfluss auf die Abbildungsqualität oder den Abbildungsmaßstab.

Das Beobachtungsinstrument kann einen Spektrographen zur Zerlegung von durch den Eingangsspalt einfallendem Licht in Spektrallinien umfassen. Das Beobachtungsinstrument kann damit insbesondere als Spektroheliograph ausgebildet sein. Zur Zerlegung des einfallenden Lichts kann der Spektrograph insbesondere ein Beugungsgitter aufweisen.

Darüber hinaus kann das Beobachtungsinstrument mindestens einen elektronischen Bildsensor zur Detektion mindestens einer der Spektrallinien umfassen. Indem von dem elektronischen Bildsensor mindestens eine der Spektrallinien detektiert wird, kann eine monochrome Aufnahme des durch den Eingangsspalt fallenden Teils des Himmelskörperbildes erstellt werden. Durch die Verwendung eines elektronischen Bildsensors kann dabei die aufzunehmende Spektrallinie auf einfache Weise elektronisch ausgewählt und weiterverarbeitet werden.

Vorzugsweise ist die Bilderzeugungsvorrichtung mit dem mindestens einen elektronischen Bildsensor korreliert. Die mittels des mindestens einen Bildsensors angefertigten Aufnahmen setzen sich in der Regel aus mehreren Einzelaufnahmen der jeweils durch den Eingangsspalt fallenden Teile des Himmelskörperbildes zusammen. Durch die Korrelation der Bilderzeugungsvorrichtung mit dem mindestens einen Bildsensor können die Funktion des mindestens einen Bildsensors und Bewegung um die Scanachse abgestimmt werden. Insbesondere im Hinblick auf die Frequenz, in der der mindestens eine Bildsensor die Einzelaufnahmen anfertigt, und die Reihenfolge, in der die Einzelaufnehmen zu einer Gesamtaufnahme des Himmelskörperbildes zusammengesetzt werden, ist die Korrelation vorteilhaft. In einem einfachen Fall kann die Korrelation rein zeitlich ausgebildet sein. Dabei sind dem mindestens einen elektronischen Bildsensor der Startzeitpunkt und/oder die Geschwindigkeit des Kippens um die Scanachse bekannt. Die Einzelaufnahmen können insbesondere anhand dieser Parameter anschließend von einem Rechner zusammengesetzt werden. Eine elektronische Kopplung der Bewegung um die mindestens eine Scanachse und dem mindestens einen elektronischen Bildsensor ist dafür nicht erforderlich. Vorzugsweise sind die Bilderzeugungsvorrichtung und der mindestens eine elektronische Bildsensor elektronisch miteinander gekoppelt, besonders bevorzugt mittels einer elektronischen Datenverarbeitungseinheit.

In einer bevorzugten Ausführungsform der Erfindung ist der mindestens eine elektronische Bildsensor unverschiebbar gegenüber dem Spektrographen angeordnet. Dadurch kann das Beobachtungsinstrument konstruktiv einfacher und kostengünstiger hergestellt werden. Der mindestens eine elektronische Bildsensor weist vorzugsweise eine erste Dimension und eine zweite Dimension auf. Der mindestens eine Bildsensor kann derart angeordnet sein, dass die mindestens eine von dem Spektrographen ausgegebene Spektrallinie entlang der ersten Dimension ausgerichtet ist. Bei mehreren von dem Spektrographen ausgegebenen Spektrallinien können die Spektrallinien in Richtung der zweiten Dimension parallel zueinander angeordnet sein. Die erste Dimension einer detektierten Spektrallinie kann damit eine Ortsinformation über den detektierten Inhalt enthalten. Die zweite Dimension einer detektierten Spektrallinie kann eine Farbinformation über den detektierten Inhalt enthalten. Die Auswahl einer der mindestens einen zu detektierenden, an beliebiger Stelle auf den mindestens einen Bildsensor fallenden Spektrallinie und deren Anordnung in der Gesamtaufnahme des Himmelskörperbildes können elektronisch erfolgen.

Der mindestens eine elektronische Bildsensor kann als Zeilensensor ausgebildet sein. Dadurch kann der von dem mindestens einen elektronischen Bildsensor benötigte Bauraum verkleinert und das Beobachtungsinstrument günstiger hergestellt werden. Durch die Verwendung eines Zeilensensors kann außerdem der Rechenaufwand bei der Erstellung der Aufnahme des Himmelskörperbildes reduziert werden. Der Zeilensensor ist vorzugsweise parallel zu der mindestens einen von dem Spektrographen ausgegebenen Spektrallinie derart angeordnet, dass die mindestens eine zu detektierende Spektrallinie auf den Zeilensensor fällt. Der Zeilensensor ist damit vorzugsweise entlang der ersten Dimension angeordnet. Die Auswahl der mindestens einen zu detektierenden Spektrallinie kann somit durch die Anordnung des Zeilensensors entlang der zweiten Dimension getroffen werden. Das zusätzliche Erfassen der Farbinformation ist damit zur Erzeugung einer monochromen Aufnahme nicht nötig. Ein Zeilensensor ist für die Erstellung eines monochromatischen Himmelskörperbildes somit ausreichend.

Vorzugsweise weist die Bilderzeugungsvorrichtung eine elektronische Schnittstelle auf. Zusätzlich können insbesondere der Spektrograph und/oder der mindestens eine elektronische Bildsensor eine elektronische Schnittstelle aufweisen. Die elektronische Schnittstelle des Spektrographen ist vorzugsweise an dem Beugungsgitter angeordnet. Das Beugungsgitter kann, insbesondere zur Einstellung der Wellenlänge, verschiebbar, insbesondere verdrehbar, gegenüber dem Eingangsspalt bzw. dem Kollimationsobjektiv angeordnet sein. Vorzugsweise kann damit insbesondere die Wellenlänge des Beugungsgitters mittels der elektronischen Schnittstelle des Spektrographen eingestellt werden.

Die Fokussierung des Beobachtungsinstruments kann durch die Veränderung der Anordnung, insbesondere des Abstands, der jeweiligen Komponenten zueinander bei mindestens einem der folgenden Komponentenpaare erfolgen:
- Bilderzeugungsvorrichtung - Eingangsspalt,
- Kollimationsobjektiv - Eingangsspalt,
- Kameraobjektiv - Bildsensor.

Vorzugsweise ist die Fokussierung mittels der elektronischen Schnittstelle mindestens einer der entsprechenden Komponenten einstellbar. Insbesondere dafür kann auch mindestens eine der folgenden Komponenten die elektronische Schnittstelle aufweisen: Eingangsspalt, Kollimationsobjektiv, Kameraobjektiv.

Vorzugsweise ist die elektronische Schnittstelle als ASCOM-Schnittstelle ausgebildet. Bei der ASCOM-Schnittstelle handelt es sich um eine standardisierte Softwareschnittstelle für astronomische Ausrüstung. Dadurch kann die elektronische Kommunikation und zwischen den einzelnen Komponenten über eine standardisierte Softwareschnittstelle erfolgen und damit erleichtert werden. Auch die Bedienung der Anordnung mithilfe eines Zentralrechners, der besonders bevorzugt ebenfalls eine ASCOM-Schnittstelle aufweist, wird dadurch erheblich vereinfacht. Besonders vorteilhaft ist es dabei, wenn der Spektrograph eine ASCOM-Schnittstelle aufweist. Die ASCOM-Schnittstelle der Bilderzeugungsvorrichtung umfasst vorzugsweise eine ASCOM-Schnittstelle der Scanachse.

Ein Ausführungsbeispiel der Erfindung wird anhand der nachfolgenden Figuren erläutert. Es zeigt:
- Figur 1: eine schematische Darstellung eines Beobachtungsinstruments mit einem ersten Reflexionselement und einem zweiten Reflexionselement,
- Figur 2a: eine schematische Darstellung der Reflexionselemente des in Fig. 1 gezeigten Ausführungsbeispiels in einer nicht gekippten Position des ersten Reflexionselements,
- Figur 2b: eine schematische Darstellung der Reflexionselemente des in Fig. 1 gezeigten Ausführungsbeispiels in einer gekippten Position des ersten Reflexionselements.

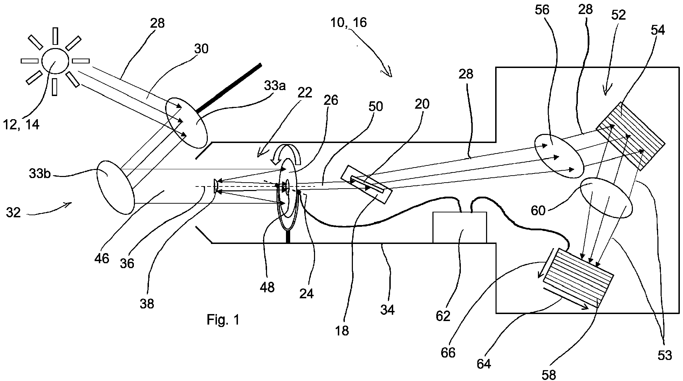

Die Figuren 1 bis 2b zeigen verschiedene Ansichten eines Ausführungsbeispiels. Der Übersichtlichkeit halber werden nicht alle Bezugszeichen in jeder Figur verwendet.

Figur 1 zeigt eine schematische Darstellung eines Beobachtungsinstruments 10 zur Beobachtung eines Himmelskörpers 12, nämlich einer Sonne 14. Das Beobachtungsinstrument 10 ist vorzugsweise als Spektroheliograph 16 ausgebildet. Das Beobachtungsinstrument 10 umfasst eine Eingangsebene 18 mit einem Eingangsspalt 20 zum Einlass mindestens eines Teils eines Himmelskörperbildes, eine Bilderzeugungsvorrichtung 22 zur Erzeugung des Himmelskörperbildes auf der Eingangsebene 18, sowie eine Scanachse 24. Die Bilderzeugungsvorrichtung 22 weist ein erstes Reflexionselement 26 auf, das derart kippbar um die Scanachse 24 angeordnet ist, dass durch ein Kippen des ersten Reflexionselements 26 um die Scanachse 24 eine Relativbewegung zwischen dem Himmelskörperbild und der Eingangsebene 18 erzeugbar ist. Dadurch kann das Himmelskörperbild über den Eingangsspalt 20 bewegt werden. Die Scanachse 26 kann dabei das erste Reflexionselement 26 schneiden.

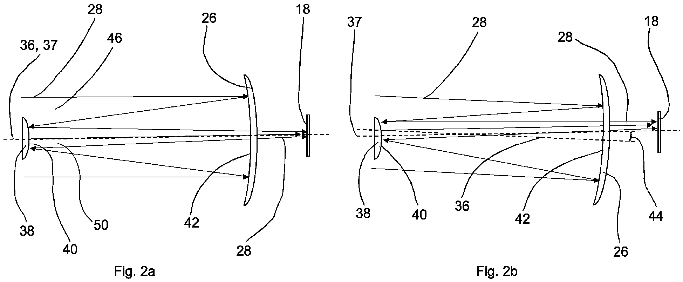

Die Fig. 2a und 2b zeigen anschaulich den Effekt des Kippens des ersten Reflexionselements 26. Während in der ersten, in Fig. 2a gezeigten Position des ersten Reflexionselements das das Himmelskörperbild erzeugenden Licht 28 mittig auf die Eingangsebene 18 fallen, trifft das Licht 28 in Fig. 2b, die das erste Reflexionselement 26 in einer zweiten, anders gekippten Position zeigt, an einer abweichenden Stelle auf die Eingangsebene 18.

Die Geschwindigkeit, mit der das Himmelskörperbild über den Eingangsspalt 20 bewegt wird, kann somit insbesondere von der Geschwindigkeit abhängen, mit der das erste Reflexionselement 26 um die Scanachse 24 gekippt wird. Das erste Reflexionselement 26 ist vorzugsweise im Strahlengang 30 des von dem beobachteten Himmelskörper 12 ausgesendeten und auf die Eingangsebene 18 auftreffenden Lichts 28 angeordnet.

Wie Fig. 1 zeigt, kann das Beobachtungsinstrument 10 mit einem Zölostat 32 kombiniert sein, um die durch die Erdrotation hervorgerufene Relativbewegung zwischen dem Himmelskörperbild und dem Beobachtungsinstrument auszugleichen. Der Zölostat 32 kann einen ersten Reflektor 33a und einen zweiten Reflektor 33b umfassen. Der Zölostat 32 kann im Strahlengang 30 des von dem beobachteten Himmelskörper 12 ausgesendeten Lichts 28 zwischen dem beobachteten Himmelskörper 12 und dem ersten Reflexionselement 26 angeordnet sein.

Die in Fig. 1 gezeigte Bilderzeugungsvorrichtung 22 ist in einem Instrumentengehäuse 34 des Beobachtungsinstruments 10 angeordnet. Das erste Reflexionselement 26 ist relativ zu dem Instrumentengehäuse 34 drehbar um die Scanachse 24 gelagert sein.

Die Scanachse 24 ist mechanisch sowie optisch parallel zu dem Eingangsspalt 20 angeordnet. Durch das Kippen des ersten Reflexionselements 26 kann das Himmelskörperbild damit quer über den Eingangsspalt 20 geführt werden. Dies kann die Aufnahme der einzelnen durch den Eingangsspalt 20 fallenden Ausschnitte des Himmelskörperbildes und deren anschließende Zusammensetzung zu einem Gesamtbild erleichtern.

Wie vor allem aus Fig. 2a und 2b deutlich wird, ist das erste Reflexionselement 26 sphärisch konkav ausgebildet. Das erste Reflexionselement 26 kann aufgrund der konkaven Ausbildung einen nicht dargestellten ersten Brennpunkt aufweisen.

Die in den Fig. 1 bis 2b gezeigte Bilderzeugungsvorrichtung 22 weist ein zweites Reflexionselement 38 auf, das mit dem ersten Reflexionselement 26 in optischer Wirkverbindung steht. Die Wirkverbindung ist vorzugsweise derart ausgestaltet, dass eine zweite optische Wirkfläche 40 des zweiten Reflexionselements 38 einer ersten optischen Wirkfläche 42 des ersten Reflexionselements 26 zugewandt ist. Das zweite Reflexionselement 38 kann auf einer ersten optischen Achse 36 angeordnet sein. So kann eine Reflexion des auf das erste Reflexionselement 26 auftreffenden Lichts 28 zu dem zweiten Reflexionselement 38 stattfinden. Die erste optische Achse 36 verläuft als Normale durch den Krümmungsscheitel des ersten Reflexionselements.

Der Aufprallwinkel, in dem das einfallende Licht 28 auf das zweite Reflexionselement 38 auftrifft, ist typischerweise gleich dem Abprallwinkel, unter dem das von dem zweiten Reflexionselement 38 reflektierte Licht 28 von dem zweiten Reflexionselement 38 abprallt. Der Effekt des Kippens des ersten Reflexionselements 26 auf das auf der Eingangsebene 18 erzeugte Himmelskörperbild kann sich dadurch verdoppeln. Dadurch kann bei Vorhandensein des zweiten Reflexionselements 38 bei einer Halbierung eines Kippwinkels 44 im Vergleich zu einer Ausführungsform ohne das zweite Reflexionselement die gleiche Bewegung des Himmelskörperbilds auf der Eingangsebene 18 bewirkt werden. Der Kippwinkel 44 beschreibt vorzugsweise den Winkel zwischen den die erste optische Achse 36 in einer gekippten Position des ersten Reflexionselements 26 mit der ersten optischen Achse in einer nicht gekippten Position des ersten Reflexionselements 26 einschließt (siehe Fig. 2b). Vorzugsweise liegen in einer nicht gekippten Position des ersten Reflexionselements 26 die erste optische Achse 36 und eine zweite optische Achse des zweiten Reflexionselements 37 aufeinander oder parallel zueinander (siehe Fig. 2a, 2b).

Das zweite Reflexionselement 38 ist sphärisch konvex ausgebildet. Das erste Reflexionselement 26 und das zweite Reflexionselement 38 sind vorzugsweise derart ausgebildet, dass durch die Kombination des konkaven ersten Reflexionselements 26 und des konvexen zweiten Reflexionselements 38 die Bildwölbung ausgeglichen wird. Die Petzval-Summe der Bilderzeugungsvorrichtung ergibt sich damit vorzugsweise zu 0. Das auf der Eingangsebene 18 erzeugte Himmelskörperbild weist damit vorzugsweise keine Bildwölbung auf.

Wie in Fig. 1 besonders anschaulich dargestellt ist, ist das zweite Reflexionselement 38 in einem einfallenden Strahlengang 46 des ersten Reflexionselements 26 angeordnet. Das erste Reflexionselement 26 weist vorzugsweise Durchtrittsöffnung 48 für einen ausgehenden Strahlengang 50 des zweiten Reflexionselements 38 auf, sodass der ausgehende Strahlengang 50 des zweiten Reflexionselements 38 auf die Eingangsebene 18 treffen kann. Mit dem ersten Reflexionselement 26 und dem zweiten Reflexionselement 38 sind die optischen Elemente, die wesentlichen Einfluss auf die Abbildungsqualität oder den Abbildungsmaßstab haben, als reflektierende Elemente ausgebildet. In der in den Fig. 1 bis 2b dargestellten Ausführungsform ist die Bilderzeugungsvorrichtung 22 somit als Spiegeloptik ausgebildet.

Wie in Fig. 1 dargestellt ist, kann das Beobachtungsinstrument 10 einen Spektrographen 52 zur Zerlegung von durch den Eingangsspalt 20 einfallendem Licht 28 in Spektrallinien 53 umfassen. Das Beobachtungsinstrument 10 kann damit als Spektroheliograph 16 ausgebildet sein. Zur Zerlegung des einfallenden Lichts 28 kann der Spektrograph 52 insbesondere ein reflektierendes Beugungsgitter 54 aufweisen. Der Spektrograph 52 umfasst vorzugsweise außerdem ein Kollimationsobjektiv 56 durch das das Licht 28 vor dem Auftreffen auf das Beugungsgitter 54 hindurchtritt.

Darüber hinaus kann das Beobachtungsinstrument 10 mindestens einen elektronischen Bildsensor 58 zur Detektion mindestens einer der Spektrallinien 53 umfassen. Zwischen dem Beugungsgitter 54 und dem elektronischen Bildsensor 58 ist vorzugsweise ein Kameraobjektiv 60 angeordnet. Indem von dem elektronischen Bildsensor 60 mindestens eine der Spektrallinien 53 detektiert wird, kann eine monochrome Aufnahme des durch den Eingangsspalt 20 fallenden Teils des Himmelskörperbildes erstellt werden.

Vorzugsweise ist die Bilderzeugungsvorrichtung 22 mit dem elektronischen Bildsensor 58 korreliert. Dafür können die Bilderzeugungsvorrichtung 22 und der elektronische Bildsensor 58 mittels einer elektronischen Datenverarbeitungseinheit 62 miteinander gekoppelt sein. Die mittels des Bildsensors 58 angefertigten Aufnahmen setzen sich in der Regel aus mehreren Einzelaufnahmen der jeweils durch den Eingangsspalt 20 fallenden Teile des Himmelskörperbildes zusammen. Durch die Korrelation der Bilderzeugungsvorrichtung 22 mit dem Bildsensor 58 können die Funktion des Bildsensors 58 und Bewegung um die Scanachse 24 aufeinander abgestimmt werden. Insbesondere im Hinblick auf die Frequenz, in der Bildsensor 58 die Einzelaufnahmen anfertigt, und die Reihenfolge, in der die Einzelaufnehmen zu einer Gesamtaufnahme des Himmelskörperbildes zusammengesetzt werden, ist die Korrelation vorteilhaft.

Der elektronische Bildsensor 58 ist unverschiebbar gegenüber dem Spektrographen 52 angeordnet. Der elektronische Bildsensor 58 weist vorzugsweise eine erste Dimension 64 und eine zweite Dimension 66 auf. Der Bildsensor 58 ist dabei vorzugsweise derart angeordnet, dass die von dem Spektrographen 52 ausgegebene Spektrallinien 53 entlang der ersten Dimension 64 ausgerichtet sind. In Richtung der zweiten Dimension 66 können die Spektrallinien 53 parallel zueinander angeordnet sein. Die erste Dimension 64 einer der detektierten Spektrallinien 53 kann damit eine Ortsinformation über den detektierten Inhalt enthalten. Die zweite Dimension 66 einer der detektierten Spektrallinien 53 kann eine Farbinformation über den detektierten Inhalt enthalten. Die Auswahl einer der zu detektierenden, an beliebiger Stelle auf den Bildsensor 58 fallenden Spektrallinien 53 und deren Anordnung in der Gesamtaufnahme des Himmelskörperbildes können elektronisch, insbesondere mittels der elektronischen Datenverarbeitungseinheit 62, erfolgen.

Vorzugsweise weist die Bilderzeugungsvorrichtung 22 eine elektronische Schnittstelle auf. Zusätzlich können insbesondere der Spektrograph 52 und/oder der mindestens eine elektronische Bildsensor 58 eine elektronische Schnittstelle aufweisen. Die elektronische Schnittstelle des Spektrographen 52 ist vorzugsweise an dem Beugungsgitter 54 angeordnet. Das Beugungsgitter 54 kann, insbesondere zur Einstellung der Wellenlänge, verschiebbar, insbesondere verdrehbar, gegenüber dem Eingangsspalt 20 bzw. dem Kollimationsobjektiv 56 angeordnet sein. Vorzugsweise kann damit insbesondere die Wellenlänge des Beugungsgitters 54 mittels der elektronischen Schnittstelle des Spektrographen 52 eingestellt werden.

Die Fokussierung des Beobachtungsinstruments 10 kann durch die Veränderung der Anordnung, insbesondere des Abstands, der jeweiligen Komponenten zueinander bei mindestens einem der folgenden Komponentenpaare erfolgen:
- Bilderzeugungsvorrichtung 22 - Eingangsspalt 20,
- Kollimationsobjektiv 56 - Eingangsspalt 20,
- Kameraobjektiv 60 - Bildsensor 58.

Vorzugsweise ist die Fokussierung mittels der elektronischen Schnittstelle mindestens einer der entsprechenden Komponenten einstellbar. Insbesondere dafür kann auch mindestens eine der folgenden Komponenten die elektronische Schnittstelle aufweisen: Eingangsspalt 20, Kollimationsobjektiv 56, Kameraobjektiv 60. Vorzugsweise ist die elektronische Schnittstelle als ASCOM-Schnittstelle ausgebildet.

### Bezugszeichenliste

- 10: Beobachtungsinstrument
- 12: Himmelskörper
- 14: Sonne
- 16: Spektroheliograph
- 18: Eingangsebene
- 20: Eingangsspalt
- 22: Bilderzeugungsvorrichtung
- 24: Scanachse
- 26: erstes Reflexionselement
- 28: Licht
- 30: Strahlengang
- 32: Zölostat
- 33a: erster Reflektor
- 33b: zweiter Reflektor
- 34: Instrumentengehäuse
- 36: erste optische Achse
- 37: zweite optische Achse
- 38: zweites Reflexionselement
- 40: zweite optische Wirkfläche
- 42: erste optische Wirkfläche
- 44: Kippwinkel
- 46: einfallender Strahlengang
- 48: Durchtrittsöffnung
- 50: ausgehender Strahlengang
- 52: Spektrograph
- 53: Spektrallinien
- 54: Beugungsgitter
- 56: Kollimationsobjektiv
- 58: Bildsensor
- 60: Kameraobjektiv
- 62: elektronische Datenverarbeitungseinheit
- 64: erste Dimension
- 66: zweite Dimension

## Patentansprüche

1. Beobachtungsinstrument (10) zur Beobachtung eines Himmelskörpers (12) mit
• einer Eingangsebene (18) mit einem Eingangsspalt (20) zum Einlass mindestens eines Teils eines Himmelskörperbildes,
• einer Bilderzeugungsvorrichtung (22) zur Erzeugung des Himmelskörperbildes auf der Eingangsebene (18), wobei die Bilderzeugungsvorrichtung (22) ein erstes Reflexionselement (26) umfasst,
• einer Scanachse (24),
wobei das erste Reflexionselement (26) derart kippbar um die Scanachse (24) angeordnet ist, dass durch ein Kippen des ersten Reflexionselements (26) um die Scanachse (24) eine Relativbewegung zwischen dem Himmelskörperbild und der Eingangsebene (18) erzeugbar ist.

2. Beobachtungsinstrument nach Anspruch 1,
**dadurch gekennzeichnet, dass**
die Bilderzeugungsvorrichtung (22) in einem Instrumentengehäuse (34) des Beobachtungsinstruments (10) angeordnet ist.

3. Beobachtungsinstrument nach einem der vorhergehenden Ansprüche, **dadurch gekennzeichnet, dass** die Scanachse (24) derart angeordnet ist, dass durch ein Kippen des ersten Reflexionselements (26) um die Scanachse (24) das Himmelskörperbild orthogonal zu dem Eingangsspalt (20) bewegbar ist.

4. Beobachtungsinstrument nach einem der vorhergehenden Ansprüche, **dadurch gekennzeichnet, dass** das erste Reflexionselement (26) konkav, insbesondere sphärisch konkav, oder konvex, insbesondere sphärisch konvex, ausgebildet ist.

5. Beobachtungsinstrument nach einem der vorhergehenden Ansprüche, **dadurch gekennzeichnet, dass** die Bilderzeugungsvorrichtung (22) ein zweites Reflexionselement (38) aufweist, das mit dem ersten Reflexionselement (26) in optischer Wirkverbindung steht.

6. Beobachtungsinstrument nach Anspruch 5,
**dadurch gekennzeichnet, dass**
das zweite Reflexionselement (38) konvex, insbesondere sphärisch konvex, oder konkav, insbesondere sphärisch konkav, oder plan ausgebildet ist.

7. Beobachtungsinstrument nach einem der vorhergehenden Ansprüche, **dadurch gekennzeichnet, dass** die Petzval-Summe der Bilderzeugungsvorrichtung (22) 0 ist.

8. Beobachtungsinstrument nach einem der Ansprüche 5 bis 7, **dadurch gekennzeichnet, dass**
das zweite Reflexionselement (38) in einem einfallenden Strahlengang (46) des ersten Reflexionselements (26) angeordnet ist.

9. Beobachtungsinstrument nach einem der Ansprüche 5 bis 8, **dadurch gekennzeichnet, dass**
das erste Reflexionselement (26) eine Durchtrittsöffnung (48) für einen ausgehenden Strahlengang (50) des zweiten Reflexionselements (38) aufweist.

10. Beobachtungsinstrument nach einem der vorhergehenden Ansprüche, **dadurch gekennzeichnet, dass** die Bilderzeugungsvorrichtung (22) als Spiegeloptik ausgebildet ist.

11. Beobachtungsinstrument nach einem der vorhergehenden Ansprüche, **dadurch gekennzeichnet, dass** das Beobachtungsinstrument (10) einen Spektrographen (52) zur Zerlegung von durch den Eingangsspalt (20) einfallendem Licht (28) in Spektrallinien (53) umfasst.

12. Beobachtungsinstrument nach Anspruch 11,
**dadurch gekennzeichnet, dass**
das Beobachtungsinstrument (10) mindestens einen elektronischen Bildsensor (58) zur Detektion mindestens einer der Spektrallinien (53) umfasst.

13. Beobachtungsinstrument nach Anspruch 12,
**dadurch gekennzeichnet, dass**
die Bilderzeugungsvorrichtung (22) mit dem mindestens einen elektronischen Bildsensor (58) korreliert ist.

14. Beobachtungsinstrument nach einem der Ansprüche 12 bis 13, **dadurch gekennzeichnet, dass**
der mindestens eine elektronische Bildsensor (58) unverschiebbar gegenüber dem Spektrographen (52) angeordnet ist.

15. Anordnung nach einem der vorhergehenden Ansprüche,
**dadurch gekennzeichnet, dass**
die Bilderzeugungsvorrichtung (22) eine elektronische Schnittstelle aufweist.
